# EUROPEAN PATENT APPLICATION

(11) **EP 4 124 085 A1**
(43) Date of publication of application: **25.01.2023**
(21) Application number: 21782062.0
(22) Date of filing: 02.04.2021
(51) Int. Cl.: H04W 12/04, H04W 12/06, H04W 76/10

(54) **COMMUNICATION SYSTEM, METHOD AND APPARATUS**

(30) Priority: 03.04.2020 CN 202010260887
(71) Applicant: Huawei Technologies Co., Ltd., Shenzhen, Guangdong 518129 (CN)
(72) Inventor: WU, Yizhuang, Shenzhen, Guangdong 518129 (CN); LI, He, Shenzhen, Guangdong 518129 (CN); WU, Rong, Shenzhen, Guangdong 518129 (CN)
(74) Representative: Gill Jennings & Every LLP
(86) International application number: PCT/CN2021/085403
(87) International publication number: WO 2021/197489

(57) **Abstract**

This application provides a communication system, method, and apparatus, to resolve a prior-art problem that a terminal device does not know how to initiate a correct procedure to establish a communication connection to an application function AF to obtain a business service. A principle of the method is as follows: An AF sends a service mode supported by the AF to UE by using a core network. Therefore, before initiating a service to the AF, the UE can sense the service mode supported by the AF, and the UE initiates a correct connection establishment procedure to the AF based on the service mode supported by the AF.

## Description

This application claims priority to Chinese Patent Application No. 202010260887.3, filed with the China National Intellectual Property Administration on April 3, 2020 and entitled "COMMUNICATION SYSTEM, METHOD, AND APPARATUS", which is incorporated herein by reference in its entirety.

### TECHNICAL FIELD

This application relates to the field of communication technologies, and in particular, to a communication system, method, and apparatus.

### BACKGROUND

Currently, a terminal device may support an authentication and key management for applications (authentication and key management for applications, AKMA) service. In the AKMA service, the terminal device may send application session establishment request (Application Session Establishment Request) message to an application function (application function, AF) by using a reference point Ua*. The application session establishment request message carries a parameter used to support the AF in obtaining a key, for example, a Kakma ID, to trigger the AF to obtain a corresponding AF security key.

The existing AKMA service does not define how the terminal device determines whether to initiate a Ua* procedure. When receiving an application session establishment request sent by the UE, an AF that supports the AKMA service can parse the application session establishment request to perform a subsequent procedure. If an AF does not support the AKMA service, the AF cannot parse the message to continue to perform a subsequent procedure, and therefore, the AF cannot establish a communication connection to the terminal device. Consequently, a communication link between the terminal device and the AF fails to be established.

### SUMMARY

This application provides a communication system, method, and apparatus, so that a terminal device can determine whether to initiate a Ua* procedure to establish a communication connection to an AF.

A first aspect of this application provides a communication system. The system includes an application function network element and a data management network element.

The application function network element is configured to send first information to the data management network element, where the first information includes capability information of the application function network element, and the capability information of the application function network element is used to indicate a service mode supported by the application function network element; and
the data management network element is configured to receive the capability information of the application function network element from the application function network element, and send the capability information of the application function network element to a terminal device.

In embodiments of this application, the application function network element sends the service mode supported by the application function network element to the terminal device by using a core network. Therefore, before the terminal device initiates a service to the application function network element, the terminal device can sense the service mode supported by the application function network element, and the terminal device initiates a correct connection establishment procedure to the application function network element based on the service mode supported by the application function network element.

In a possible implementation, the system further includes a policy control function network element. The data management network element is specifically configured to send the capability information of the application function network element to the policy control function network element; and
the policy control function network element is configured to receive the capability information of the application function network element sent by the data management network element, and send the capability information of the application function network element to the terminal device by using an access and mobility management function.

In a possible implementation, the policy control function network element is configured to generate or update a UE route selection policy URSP corresponding to the terminal device, and the URSP includes the capability information of the application function network element. The capability information of the application function network element is carried in the URSP of the terminal device (that is, an information element is newly added to the URSP), to send the capability information of the application function network element to the terminal device. When the terminal device needs to establish a communication connection to the AF, the UE obtains a service mode supported by the AF in the URSP, and determines, based on the service mode supported by the AF, a service mode used by the UE and the AF.

In a possible implementation, the data management network element is specifically configured to: request an authentication server function network element to perform security protection on the capability information of the application function network element; receive a response message sent by the authentication server function network element, where the response message includes security-protected capability information of the application function network element; and send the security-protected capability information of the application function network element to the terminal device by using an access and mobility management function. The data management network element may perform security protection on the capability information of the application function network element, and then send the capability information to the terminal device. This avoids malicious tampering of the capability information of the application function network element when the capability information is transmitted to the terminal device.

In a possible implementation, the data management network element is further configured to: obtain capability information of the terminal device, where the capability information of the terminal device is used to indicate a service mode supported by the terminal device; and when the service mode supported by the terminal device matches the service mode supported by the application function network element, determine that the capability information of the application function network element needs to be sent to the terminal device.

In a possible implementation, the first information further includes a target object identifier, where the terminal device. The data management network element is further configured to determine, based on the target object identifier, that the capability information of the application function network element needs to be sent to the terminal device.

When the data management network element receives the capability information of the application function network element from the AF, the data management network element needs to determine, based on the obtained capability information of the terminal device, terminal devices to which the received capability information of the application function network element is to be sent. This avoids sending useless information to a terminal device that is irrelevant to/does not support a corresponding service mode.

In a possible implementation, the capability information of the application function network element further includes a service mode selection policy, and the service mode selection policy is used to indicate priorities of a plurality of service modes supported by the application function network element. The terminal device may use, as the service mode used by the terminal device and the AF, a service mode with a highest priority in service modes supported by both the terminal device and the AF.

According to a second aspect, this application provides a communication method. The method includes: A network device receives first information from an application function network element, where the first information includes capability information of the application function network element, and the capability information of the application function network element is used to indicate a service mode supported by the application function network element; and the network device sends the capability information of the application function network element to a terminal device. The network device may be a data management network element or a policy control function network element in the implementations of this application.

In embodiments of this application, the network device receives the service mode supported by the application function network element and sends the service mode to the terminal device. Therefore, before the terminal device initiates a service to the application function network element, the terminal device can sense the service mode supported by the application function network element, and the terminal device initiates a correct connection establishment procedure to the application function network element based on the service mode supported by the application function network element.

In a possible implementation, the first information further includes a target object identifier, where the target object identifier is used to indicate the terminal device. The method further includes: The network device determines, based on the target object identifier, that the capability information of the application function network element needs to be sent to the terminal device.

In a possible implementation, the method further includes: The network device obtains capability information of the terminal device, where the capability information of the terminal device is used to indicate a service mode supported by the terminal device; and when the service mode supported by the terminal device matches the service mode supported by the application function network element, the network device determines that the capability information of the application function network element needs to be sent to the terminal device.

When the network device receives the capability information of the application function network element from the AF, the data management network element needs to determine, based on the obtained capability information of the terminal device, terminal devices to which the received capability information of the application function network element is to be sent. This avoids sending useless information to a terminal device that is irrelevant to/does not support a corresponding service mode.

In a possible implementation, the network device may be the data management network element. That the capability information of the application function network element is sent to the terminal device is specifically: The data management network element sends the capability information of the application function network element to the terminal device by using a policy control function network element; or
the data management network element requests an authentication server function network element to perform security protection on the capability information of the application function network element;
the data management network element receives a response message sent by the authentication server function network element, where the response message includes security-protected capability information of the application function network element; and
the data management network element sends the security-protected capability information of the application function network element to the terminal device by using an access and mobility management function network element.

In a possible implementation, the network device is a policy control function network element. That the capability information of the application function network element is sent to the terminal device is specifically: The policy control function network element generates a UE route selection policy URSP, where the URSP includes the capability information of the application function network element; and the policy control function network element sends the URSP to the terminal device. The policy control function network element adds the capability information of the application function network element to the URSP of the terminal device (that is, an information element is newly added to the URSP), to send the capability information of the application function network element to the terminal device. When the terminal device needs to establish a communication connection to the AF, the UE obtains a service mode supported by the AF in the URSP, and determines, based on the service mode supported by the AF, a service mode used by the UE and the AF.

In a possible implementation, the capability information of the application function network element further includes a service mode selection policy, and the service mode selection policy is used to indicate priorities of a plurality of service modes supported by the application function network element. The terminal device may use, as the service mode used by the terminal device and the AF, a service mode with a highest priority in service modes supported by both the terminal device and the AF.

In a possible implementation, the method further includes: The network device determines the priorities of the plurality of service modes supported by the application function network element. When the capability information of the application function network element does not include the service mode selection policy, the network device specifies a selection policy for the plurality of service modes supported by the application function network element. Optionally, the selection policy is specified, based on the mode supported by the terminal device, for the plurality of service modes supported by the application function network element. For example, a service mode supported by both the terminal device and the application function network element is set to have a high priority.

According to a third aspect, an embodiment of this application further provides a communication method. The method includes: A terminal device receives capability information of an application function network element sent by an access and mobility management function network element, where the capability information is used to indicate a service mode supported by the application function network element; and the terminal device determines, based on the service mode supported by the application function network element, a service mode used by the terminal device and the application function network element. Because before initiating a service to the AF, the terminal device can sense the service mode supported by the AF. Therefore, the terminal device may initiate a correct connection establishment procedure to the AF based on the service mode supported by the AF.

In a possible implementation, the capability information further includes a service mode selection policy, where the service mode selection policy is used to indicate priorities of a plurality of service modes supported by the application function network element. That the terminal device determines, based on the service mode supported by the application function network element, a service mode used by the terminal device and the application function network element is specifically: The terminal device uses, as the service mode used by the terminal device and the application function network element, a service mode with a highest priority in service modes supported by both the terminal device and the application function network element.

In a possible implementation, that a terminal device receives capability information of an application function network element sent by an access and mobility management function network element is specifically: The terminal device receives a UE route selection policy URSP sent by the access and mobility management function network element, where the URSP includes the capability information of the application function network element. When the terminal device needs to establish a communication connection to the AF, the UE obtains a service mode supported by the AF in the URSP, and determines, based on the service mode supported by the AF, a service mode used by the UE and the AF.

Embodiments of this application provide a terminal device. The terminal device has a function of implementing behavior of a terminal in any one of the foregoing method embodiments. The function may be implemented by hardware, or may be implemented by hardware executing corresponding software. The hardware or the software includes one or more modules corresponding to each sub-function in the foregoing function. The terminal device may be user equipment.

Embodiments of this application further provide a computer-readable storage medium. The computer-readable storage medium stores a computer program. When the computer program is executed by a computer, the method procedure related to the terminal device in any one of the foregoing method embodiments is implemented. Specifically, the computer may be the foregoing terminal device.

Embodiments of this application further provide a computer-readable storage medium. The computer-readable storage medium stores a computer program. When the computer program is executed by a computer, the method procedure related to the network device in any one of the foregoing method embodiments is implemented. Specifically, the computer may be the foregoing network device.

Embodiments of this application further provide a computer program or a computer program product including the computer program. When the computer program is executed by a specific computer, the computer is enabled to implement the method procedure related to the terminal device in any one of the foregoing method embodiments. Specifically, the computer may be the foregoing terminal device.

Embodiments of this application further provide a computer program or a computer program product including the computer program. When the computer program is executed by a specific computer, the computer is enabled to implement the method procedure related to the network device in any one of the foregoing method embodiments. Specifically, the computer may be the foregoing network device.

Embodiments of this application further provide an apparatus, used in a terminal device. The apparatus is coupled to a memory, and is configured to read and execute instructions stored in the memory, so that the terminal device can perform the method procedure related to the terminal device in any one of the foregoing method embodiments. The memory may be integrated into the apparatus, or may be independent of the apparatus. The apparatus may be a chip (for example, a system on a chip SoC (System on a Chip)) on the terminal device.

Embodiments of this application further provide an apparatus, used in a network device. The apparatus is coupled to a memory, and is configured to read and execute instructions stored in the memory, so that the network device can perform the method procedure related to the network device in any one of the foregoing method embodiments. The memory may be integrated into the apparatus, or may be independent of the apparatus. The apparatus may be a chip (for example, a system on a chip SoC (System on a Chip)) on the network device.

### BRIEF DESCRIPTION OF DRAWINGS

FIG. 1 is a schematic diagram of a network architecture of a 5G communication system;
FIG. 2 is a schematic diagram of a network architecture of an AKMA service;
FIG. 3 is a schematic flowchart of generating a key of an AKMA service;
FIG. 4 is a schematic flowchart of generating a communication key between an AF and UE;
FIG. 5 is a schematic diagram in which UE establishes a communication connection to an AF by using an HTTP procedure;
FIG. 6 is a schematic flowchart of a communication method according to this application;
FIG. 7 is a schematic flowchart of another communication method according to this application;
FIG. 8 is a schematic flowchart of still another communication method according to this application;
FIG. 9 is a schematic diagram of a structure of a communication apparatus according to this application; and
FIG. 10 is a schematic diagram of a structure of another communication apparatus according this application.

### DESCRIPTION OF EMBODIMENTS

To better understand the technical solutions provided in this application, technical terms in this application are first described.

### (1) 5th-generation (5^{th}-generation, 5G) system

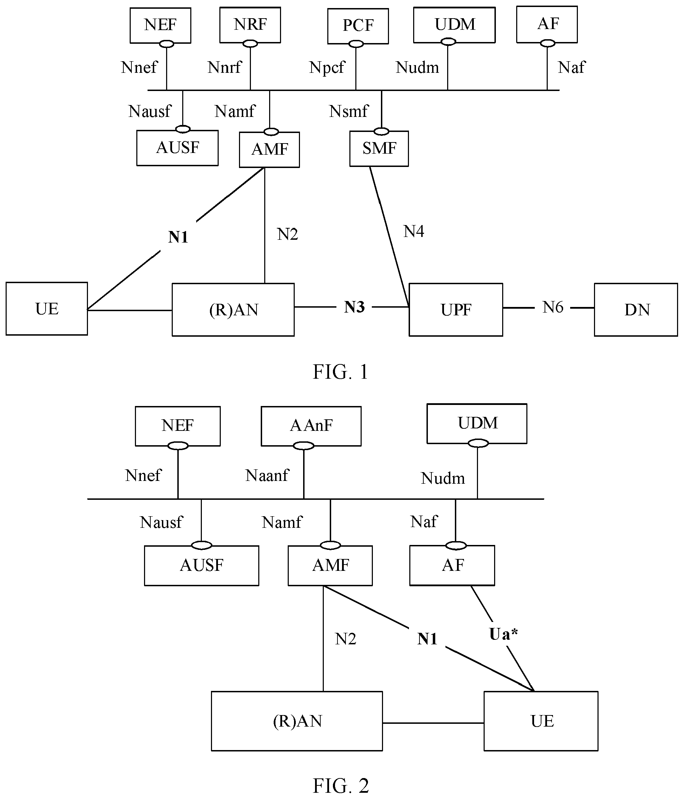

The 5G system may include a terminal device, an access network, and a core network. For example, refer to a schematic diagram of a network architecture of a 5G system shown in FIG. 1.

The terminal device may be a device having a wireless transceiver function. The terminal device may be deployed on land, including indoor, outdoor, handheld or in-vehicle, may be deployed on the water (for example, on a ship), or may be deployed in the air (for example, on an airplane, a balloon, or a satellite). The terminal device may alternatively be a mobile phone (mobile phone), a Pad (Pad), a computer having a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, and the like. The terminal device may also be referred to as a terminal, user equipment (user equipment, UE), an access terminal device, a vehicle-mounted terminal, an industrial control terminal, a UE unit, a UE station, a mobile station, a mobile console, a remote station, a remote terminal device, a mobile device, a UE agent, a UE apparatus, or the like. The terminal device may also be fixed or mobile. In FIG. 1 and this application, an example in which the terminal device is UE is used for description.

The access network is configured to implement an access-related function, and may provide a network access function for an authorized user in a specific area. The access network forwards a control signal and user data between the terminal device and the core network. The access network may include an access network device. The access network device may be a device that provides access for the terminal device, and may include a radio access network (radio access network, RAN) device and an AN device. The RAN device is mainly a radio network device in a 3GPP network, and the AN device may be an access network device defined by a non-3GPP. In systems using different radio access technologies, names of a device having a base station function may be different. For example, in a 5G system, the device is referred to as a RAN or a next-generation node base station (next-generation Node base station, gNB). In a long term evolution (long term evolution, LTE) system, the device is referred to as an evolved NodeB (evolved NodeB, eNB or eNodeB).

The core network is responsible for maintaining subscription data of a mobile network, and providing functions such as session management, mobility management, policy management, and security authentication for the UE. The core network may include the following network elements: a user plane function (user plane function, UPF), an authentication server function (authentication server function, AUSF), an access and mobility management function (access and mobility management function, AMF), a session management function (session management function, SMF), a network exposure function (network exposure function, NEF), a network function repository function (network function repository function, NRF), a policy control function (policy control function, PCF), and a unified data management (unified data management, UDM). Optionally, the core network may further include an application function (application function, AF) and a unified data repository (Unified Data Repository, UDR). In embodiments of this application, the UDM and the UDR are collectively referred to as a data management network element.

The AMF is mainly responsible for mobility management in a mobile network, for example, user location update, registration of a user with a network, and user handover. The SMF is mainly responsible for session management in a mobile network, for example, session establishment, modification, and release. The UPF is responsible for forwarding and receiving user data in the terminal device. The UPF may receive user data from a data network, and transmit the user data to the terminal device by using the access network device; or may receive user data from the terminal device by using the access network device, and forward the user data to the data network. The PCF mainly supports providing a unified policy framework to control network behavior, and providing a policy rule for a control layer network function, and is responsible for obtaining user subscription information related to a policy decision. The AUSF is configured to perform security authentication on the UE. The NEF is mainly configured to support capability and event exposure. The NRF is configured to provide another network element with a function of storing and selecting network function entity information. The UDM is configured to store user data, for example, subscription data and authentication/authorization data. The AF interacts with the 3GPP core network to provide an application layer service, for example, provide application layer data routing, provide an access network capability exposure function, interact with a policy framework to provide policy control, and interact with an IP multimedia subsystem (IP multimedia subsystem, IMS) in a 5G network.

The data network (data network, DN) is used to provide a business service for a user, and may be a private network, for example, a local area network; may be an external network that is not managed and controlled by an operator, for example, the Internet (Internet); or may be a dedicated network jointly deployed by operators, for example, an IMS network. The terminal device may access the DN by using an established protocol data unit (protocol data unit, PDU) session.

### (2) AKMA service

UE that supports the AKMA service may perform security protection based on an AKMA procedure during data transmission with an AF that supports the AKMA service to improve security of data transmission. For example, the AF corresponds to a specific video application server. When UE that supports the AKMA service performs data transmission with the AF, compared with conventional unprotected transmission between UE and an AF, using the AKMA service can improve security of data transmission. For example, refer to a schematic diagram of a network architecture of an AKMA service shown in FIG. 2. The network architecture shown in FIG. 2 includes UE, a (R)AN, an AUSF, an AMF, an AF, an NEF, an AKMA anchor function (AKMA anchor function, AAnF) network element, and a UDM.

In FIG. 2, there are three manners in which the UE communicates with the AF: The UE communicates with the AF by using the (R)AN and the AMF, the UE communicates with the AF by using the AMF, and the UE directly communicates with the AF through an interface Ua*.

In FIG. 2, in an AKMA service, the AUSF may generate a key of the AKMA service, and provide the key of the AKMA service of the UE to the AAnF. The key of the AKMA service may be Kakma, or may also be referred to as a root key of the AKMA service. The UE side also generates a same key of the AKMA service, that is, generates same Kakma.

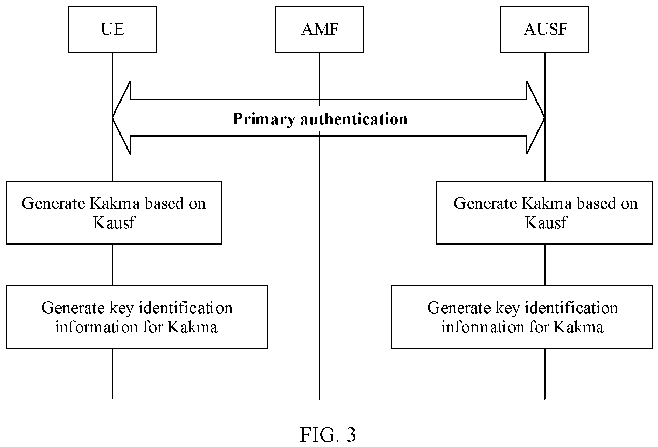

For example, for a process of generating the key of the AKMA service, refer to FIG. 3. In a process in which UE registers with a 5G core network, the UE sends a registration request to an AMF through a RAN. The registration request carries identity information of the UE. The AMF selects an AUSF based on the identity information (for example, a subscriber concealed identifier (subscriber concealed identifier, SUCI)) of the UE, and sends a message to the AUSF to trigger a primary authentication procedure. The AUSF performs authentication on the UE and sends authentication parameters to the AMF, and the AMF sends the authentication parameters to the UE through the RAN. The UE authenticates the AUSF based on the authentication parameters and sends a response to the AMF through the RAN. The AMF compares responses. If the responses are the same, the authentication succeeds. The primary authentication (primary authentication) in FIG. 3 is a process in which the AUSF authenticates the UE and the UE authenticates the AUSF in a registration process. The primary authentication may also be described as bidirectional authentication. For details, refer to related descriptions in section 6.1 of 3GPP TS33.501-g10. In FIG. 3, after the primary authentication is performed, the AUSF may generate Kakma by using an intermediate key, for example, Kausf, generated in the primary authentication process, and generate key identification information for Kakma. The key identification information may be used to identify Kakma, for example, may be a Kakma identifier (identifier, ID). After the primary authentication is performed and before the AKMA service is initiated, the UE may generate Kakma by using an intermediate key, for example, Kausf, generated in the primary authentication process, and generate key identification information for Kakma. It may be understood that the UE and the AUSF separately locally generate same Kausf, same Kakma, and same key identification information.

In FIG. 2, the AAnF may interact with the AUSF, obtain the key of the AKMA service from the AUSF, and generate a communication key between the AF and the UE and a validity period of the communication key based on the key of the AKMA service and an identifier of the AF. The AAnF may send the communication key and the validity period of the communication key to the AF, so that the AF can perform data transmission with the UE by using the communication key. This improves security of data transmission between the AF and the UE. The communication key between the AF and the UE may be, for example, Kaf.

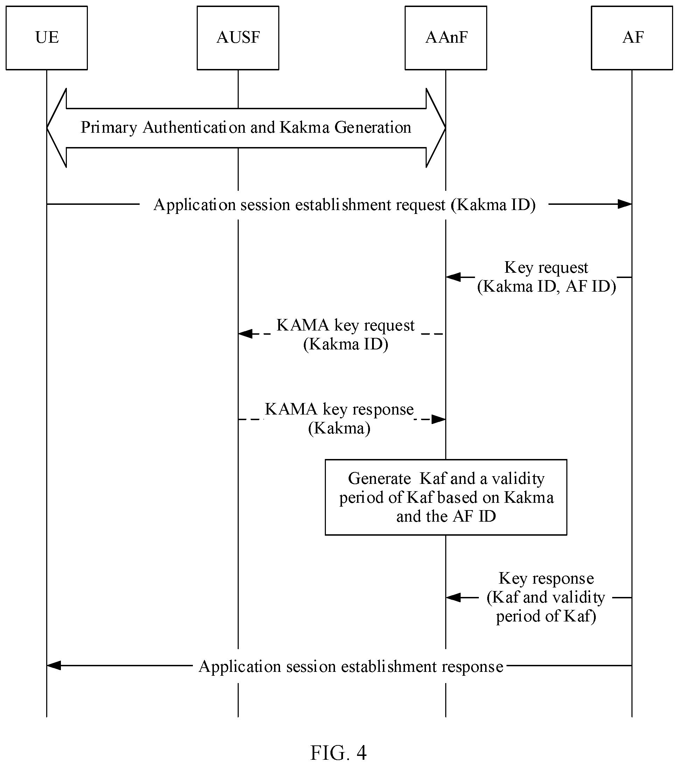

For example, for a process of generating the communication key between the AF and the UE, refer to FIG. 4. In FIG. 4, before sending an application session establishment request to the AF, the UE performs primary authentication and generates Kakma. After the Kakma and a Kakma ID are generated, an AAnF may store Kakma corresponding to the Kakma ID. The UE sends an application session establishment request (for example, an application session establishment request) that carries the Kakma ID to the AF. When receiving the application session establishment request, the AF sends a key request (for example, a key request) to the AAnF, where the key request is used to request Kaf between the AF and the UE, and the key request carries the Kakma ID and an AF ID. If the AAnF stores Kakma corresponding to the Kakma ID, the AAnF directly generates Kaf and a validity period of Kaf based on Kakma and the AF ID. If the AAnF does not store Kakma corresponding to the Kakma ID, the AAnF sends a AKMA key request (for example, an AKMA key request) that carries the Kakma ID to the AUSF. The AUSF searches for corresponding Kakma based on the Kakma ID, and sends a KAMA key response that carries Kakma to the AAnF. The AAnF generates Kaf and the validity period of Kaf based on Kakma and the AF ID. The AAnF sends a key response (for example, a key response) to the AF, where the key response carries Kaf and the validity period of Kaf. After receiving the key response, the AF sends an application session establishment response (for example, an application session establishment response) to the UE. After receiving the application session establishment response, the UE may generate Kaf based on local Kakma and the AF ID.

Kaf between different AFs and same UE may be different. For example, Kaf between an AF 1 and UE 1 is Kaf1, and Kaf between an AF 2 and the UE 1 is Kaf2. In FIG. 2, the AF may interact with a 3GPP core network element. For example, the AF may obtain a quality of service (quality of service, QoS) parameter from the PCF, or the AF provides QoS parameter for the PCF, so that data transmission of an application program may be affected. For another example, the AF may interact with the NEF. In an AKMA service scenario, the AF obtains, from the AAnF, the communication key between the AF and the UE and the validity period of the communication key. The AF may be located inside or outside the 5G core network. If the AF is located inside the 5G core network, the AF may directly interact with the PCF. If the AF is located outside the 5G core network, the AF may interact with the PCF by using the NEF.

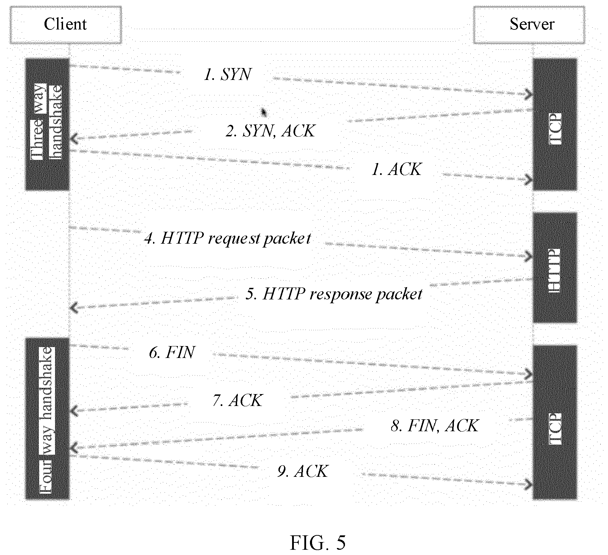

For an AF that does not support an AKMA service, the UE may establish a communication connection to the AF by using an existing procedure. As shown in FIG. 5, the UE may establish the communication connection to the AF by using an HTTP procedure. In the figure, the client may be UE, and the server may be an AF. Specifically, the UE and the AF may establish a connection between the UE and the AF through a three-way handshake; then, the UE sends a request packet to the AF, and the AF returns a response packet (data) to the UE; and the UE or the AF may disconnect the communication connection through a four-way handshake.

When the UE needs to establish communication with the AF, the UE initiates a connection establishment procedure to the AF. For different AFs, different procedures are needed to establish communication connections. In embodiments of this application, the AF notifies a service mode supported by the AF to the UE by using a network. Before initiating a service to the AF, the UE can sense the service mode supported by the AF. Therefore, the UE initiates, before initiating the service, a correct procedure to the AF based on the service mode supported by the AF.

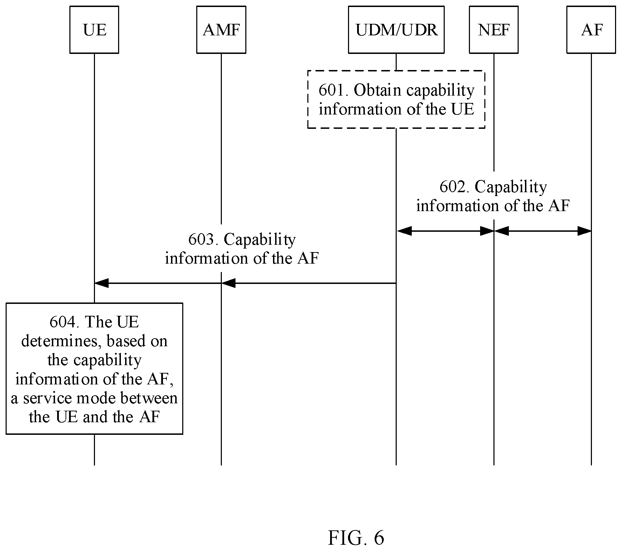

FIG. 6 is a schematic flowchart of a communication method according to this application. The procedure may include but is not limited to the following steps.

Step 601. A UDM/UDR obtains capability information of UE.

The capability information of the UE includes a service mode supported by the UE. For example, the UE supports an AKMA service, a generic bootstrapping architecture (Generic Bootstrapping Architecture, GBA) service, or another similar service. A specific service mode supported by the UE is not limited in this application.

The UDM/UDR may obtain the capability information of the UE in various implementations. Examples are as follows:
Manner 1: In a process in which the UE registers with a network, the UDM/UDR may receive the capability information of the UE reported by the UE.

For example, the UE sends a registration request to an AMF, where the registration request includes the capability information of the UE. After receiving the registration request sent by the UE, the AMF initiates a UE subscription information obtaining procedure to the UDM/UDR. In the subscription information obtaining procedure, the AMF sends the capability information of the UE to the UDM/UDR.

Manner 2: An operator management system stores authentication capability information of the UE in the UDM/UDR.

It should be noted that step 601 is optional.

Step 602. An AF reports service description information and corresponding capability information of the AF to the UDM/UDR.

The service description information is information used to identify a service (service), and the service description information may include an identifier of the AF, an identifier of an application service provided by the AF, a service filter, or the like.

The capability information of the AF includes a service mode supported by the AF. For example, the AF supports an AKMA service, a GBA service, or another similar service. A specific service mode supported by the AF is not limited in this application.

Optionally, when the AF supports a plurality of service modes, the capability information of the AF may further include a service mode selection policy. The service mode selection policy is used to determine priorities of the plurality of service modes supported by the AF. For example, the service mode selection policy may include the priority of each of the plurality of service modes supported by the AF.

For example, the capability information of the AF that is reported by the AF to the UDM/UDR may be: (AF ID, (AKMA, GBA) (1,2)).

The capability information of the AF indicates that an AF corresponding to the AF ID supports AKMA and GBA service modes, a priority corresponding to the AKMA service is 1, and a priority corresponding to the GBA service is 2. A priority value indicates a priority of a service mode recommended by the AF. For example, if the priority of the AKMA service is higher than that of the GBA service, the AKMA service mode is recommended by the AF.

Optionally, the AF further reports an identifier of a target object to the UDM/UDR. The identifier of the target object may be an identifier of a terminal device, a first group identifier, or a list including identifiers of a plurality of terminal devices. The first group identifier is used to indicate one or more terminal devices. The identifier of the target object is used to indicate a terminal device associated with the AF. For example, if the identifier of the target object includes an identifier of UE A, in subsequent step 603, the UDM/UDR needs to send, by using the AMF, some or all of service modes supported by the AF to the UE A.

In a possible implementation, the AF reports the capability information of the AF to the UDM/UDR by using an NEF. Specifically, the AF may send an Nnef_Service_config request to the NEF, where the Nnef_Service_config request includes the service description information and the capability information of the AF. The NEF may perform authorization check on the AF. If the authorization check succeeds (optional), the NEF sends the service description information and the capability information of the AF to the UDM/UDR. Optionally, when the Nnef_Service_config request further includes an external identifier of the target object, the NEF optionally maps the external identifier of the target object to an internal identifier of the target object, and sends the internal identifier of the target object to the UDM/UDR.

Step 603. The UDM/UDR sends the service description information of the AF and the capability information of the AF to the UE by using the AMF.

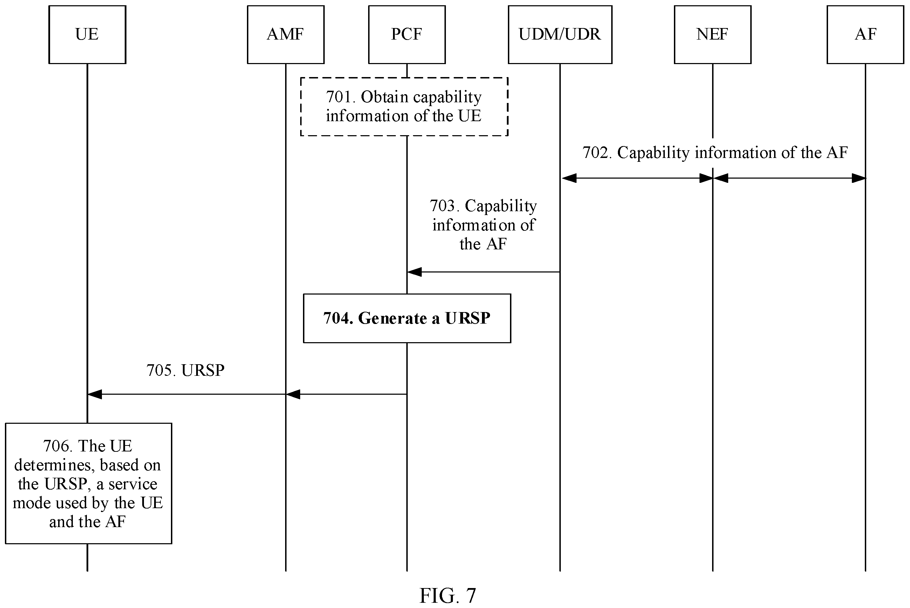

In a possible implementation, the UDM/UDR may first send the service description information of the AF and the capability information of the AF to an AUSF for security protection, and then send security-protected service description information of the AF and security-protected capability information of the AF to the UE by using the AMF. For example, the service description information of the AF and the capability information of the AF are sent to the UE by using a UE parameters update (UE parameters update, UPU) procedure. For details, refer to an embodiment in FIG. 7. Details are not described herein.

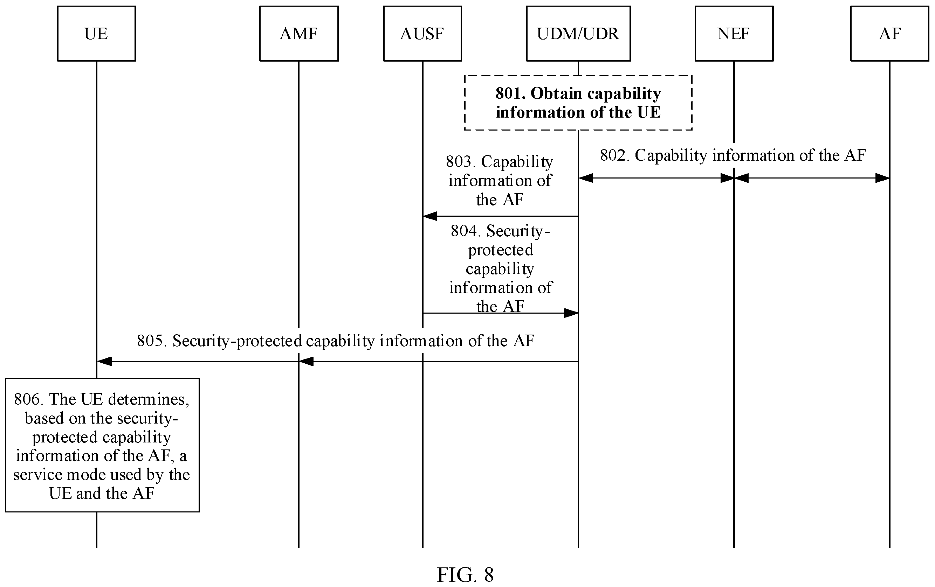

In another possible implementation, the UDM/UDR may first send the service description information of the AF and the capability information of the AF to a PCF. Then the PCF sends the service description information of the AF and the capability information of the AF to the UE by using the AMF. Alternatively, the PCF may further generate, based on the service description information of the AF and the capability information of the AF, a UE route selection policy (UE route selection policy, URSP) corresponding to the UE, and then send the generated URSP to the UE by using the AMF. For example, the service description information of the AF and the capability information of the AF are sent to the UE by using a UE configuration update (UE Configuration Update, UCU) procedure. For details, refer to an embodiment in FIG. 8. Details are not described herein.

Optionally, when the AF supports a plurality of service modes, the UDM/UDR or the PCF further determines a selection policy corresponding to the plurality of service modes supported by the AF. For example, when the capability information of the AF does not include the service mode selection policy, the UDM/UDR or the PCF may specify a selection policy corresponding to the plurality of service modes supported by the AF, and send the selection policy corresponding to the plurality of service modes supported by the AF to the UE.

Step 604. The UE obtains the service description information of the AF and the capability information of the AF, and determines, based on the service mode supported by the AF, a service mode used by the UE and the AF.

That the UE determines, based on the service mode supported by the AF, a service mode used by the UE and the AF is specifically:
The UE determines, based on the service mode supported by the UE and the service mode supported by the AF, the service mode used by the UE and the AF.

When the capability information of the AF further includes the service mode selection policy, the UE may determine, based on the service mode selection policy and from service modes supported by both the UE and the AF, a service mode used by the UE and the AF. For example, the UE may use, as the service mode used by the UE and the AF, a service mode with a highest priority in the service modes supported by both the UE and the AF.

When the capability information of the AF does not include the service mode selection policy, the UE may determine, based on local configuration or user selection and from service modes supported by both the UE and the AF, one service mode as the service mode used by the UE and the AF. For example, the UE may use, as the service mode used by the UE and the AF, a service mode with a highest priority in the service modes supported by both the UE and the AF. Alternatively, the UE may present, to a user, the service modes supported by both the UE and the AF on a UE interface, and uses, as the service mode used by the UE and the AF, a service mode selected by the user.

Further, the UE may initiate a corresponding procedure based on the determined service mode, for example, initiate an application session establishment request to the AF by using a reference point Ua*.

In embodiments of this application, the AF sends the service mode supported by the AF to the UE by using a core network. Therefore, before initiating a service to the AF, the UE can sense the service mode supported by the AF, and the UE initiates a correct connection establishment procedure to the AF based on the service mode supported by the AF.

FIG. 7 is a schematic flowchart of another communication method according to this application. The procedure may include but is not limited to the following steps.

Step 701. A PCF obtains a service mode supported by UE.

For example, the UE supports an AKMA service, a GBA service, or another service mode. A specific service mode supported by the UE is not limited in this application.

The PCF may obtain the service mode supported by the UE in various implementations. Examples are as follows:
Manner 1: In a process in which the UE registers with a network, the PCF may receive the service mode, supported by the UE, reported by the UE.

For example, the UE sends a registration request to an AMF, where the registration request includes the service mode supported by the UE. After receiving the registration request sent by the UE, the AMF sends a UE policy association establishment request to the PCF, where the UE policy association establishment request carries the service mode supported by the UE. In a possible implementation, the UE includes the service mode supported by the UE in a UE policy container, and sends the UE policy container to the PCF.

Manner 2: The PCF obtains the service mode supported by UE from a UDM/UDR.

For example, the service mode supported by the UE may be stored in the UDM/UDR as subscription data of the UE. In a process in which the UE registers with a network, an AMF obtains the service mode supported by the UE from the UDM/UDR, and sends the service mode to the PCF.

Optionally, after the PCF obtains the service mode supported by the UE, the PCF sends a first subscription request to the UDM/UDR. The first subscription request is used to indicate the UDM/UDR to feed back, to the PCF, application information corresponding to the service mode supported by the UE. Specifically, when the UDM/UDR learns that a service mode supported by a specific AF matches the service mode supported by the UE, the UDM/UDR sends a first notification message to the PCF. The first notification message may include service description information of the AF and the service mode supported by the AF. In a possible implementation, the first subscription request may include the service mode supported by the UE. Optionally, the first subscription request may further include an identifier of the UE or a second group identifier. The second group identifier is used to indicate one or more terminal devices, and the terminal devices indicated by the second group identifier include the UE.

Optionally, after the PCF obtains the service mode supported by the UE, the PCF sends a second subscription request to the UDM/UDR. The second subscription request is used to indicate the UDM/UDR to feed back, to the PCF, application information corresponding to the UE.

It should be noted that step 701 is optional.

Step 702. The AF reports the service description information and corresponding capability information of the AF to the UDM/UDR.

Refer to step 602 in the embodiment in FIG. 6. Details are not described herein again.

Optionally, the AF further reports an identifier of a target object to the UDM/UDR. The identifier of the target object may be an identifier of a terminal device, a first group identifier, or a list including identifiers of a plurality of terminal devices. The first group identifier is used to indicate one or more terminal devices. The identifier of the target object is used to indicate a terminal device associated with the AF. For example, if the identifier of the target object includes an identifier of UE A, in subsequent step 703, the UDM/UDR needs to send, by using the AMF, some or all of service modes supported by the AF to the UE A.

Step 703. The UDM/UDR sends the service description information and the corresponding capability information of the AF to the PCF.

Optionally, when the PCF sends the first subscription request to the UDM/UDR, to indicate the UDM/UDR to feed back, to the PCF, application information corresponding to a specified service mode, the UDM/UDR determines whether a service mode supported by the AF matches the service mode specified by the PCF. If the service mode supported by the AF matches the service mode specified by the PCF, the UDM/UDR sends the first notification message to the PCF. The first notification message includes the service description information and the corresponding capability information of the AF.

Optionally, when the PCF sends the second subscription request to the UDM/UDR, to indicate the UDM/UDR to feed back, to the PCF, the application information corresponding to the UE, and the target object identifier indicates the UE, the UDM/UDR sends a second notification message to the PCF. The second notification message includes the service description information and the corresponding capability information of the AF.

Optionally, when the UDM/UDR receives the target object identifier from the AF, the UDM/UDR further sends the target object identifier to the PCF.

Step 704. The PCF receives the service description information and the corresponding capability information of the AF from the UDM/UDR; and the PCF generates or updates a URSP of the UE based on the service description information and the corresponding capability information of the AF.

Specifically, the URSP includes the service description information and the corresponding capability information of the AF.

Optionally, the PCF determines, based on the service mode supported by the UE and obtained in step 701, whether to update or generate the URSP of the UE. For example, UE B reports, to the PCF in a registration procedure, that the UE B supports an AKMA service, and the capability information of the AF received by the PCF from the UDM/UDR indicates that the AF also supports the AKMA service. In this case, the PCF may generate or update a URSP of the UE B. To be specific, the PCF may determine, based on a service mode that is supported by the UE and that is stored in the PCF and the capability information of the AF received from the UDM/UDR, URSPs of which UE that needs to be updated or generated. Further, subsequent step 705 is performed to send the generated or updated URSPs to the determined UEs.

Optionally, the PCF may determine, based on the identifier of the target object, to update or generate the URSP of the UE indicated by the identifier of the target object. Further, subsequent step 705 is performed to send the generated or updated URSP to the UE indicated by the identifier of the target object.

Optionally, when the capability information of the AF does not include a service mode selection policy, the PCF may specify selection policies corresponding to a plurality of service modes supported by the AF, and further send the specified selection policies to the UE, for example, by carrying the selection policies in the URSP.

Step 705. The PCF sends the URSP to the UE.

In a possible implementation, the PCF sends an Namf_Communication_N1N2Transfer message to the AMF, where the Namf_Communication_N1N2Transfer message includes the URSP generated or updated in step 704. After receiving the Namf_Communication_N1N2Transfer message sent by the PCF, the AMF sends a UE policy transmission message to the UE, where the UE policy transmission message includes the URSP.

Step 706. The UE determines, based on the URSP, a service mode used by the UE and the AF.

When the UE needs to establish a communication connection to the AF, the UE obtains the service mode supported by the AF in the URSP, and determines, based on the service mode supported by the AF, the service mode used by the UE and the AF.

Optionally, when a UE registration procedure (step 701) is performed after the AF sends the service description information and the corresponding capability information of the AF to the UDM/UDR (step 702), the PCF may send the service description information and the corresponding capability information of the AF to the AMF in the registration procedure, so that the AMF sends the service description information and the corresponding capability information of the AF to the UE in a registration accept message.

In a possible implementation, the PCF does not add the capability information of the AF in the URSP in step 704, but directly sends the service description information and the corresponding capability information of the AF to the UE by using the AMF.

In embodiments of this application, the AF sends the capability information of the AF to the UDM/UDR by using an NEF. The PCF receives the capability information of the AF sent by the UDM/UDR, and provides the capability information of the AF for the UE when the UE accesses a network, so that the UE can obtain the capability information of the AF. Before initiating a service to the AF, the UE can sense the capability information of the AF, and the UE initiates a correct authentication procedure to the AF based on the capability information of the AF.

FIG. 8 is a schematic flowchart of another communication method according to this application. The procedure may include but is not limited to the following steps.

Step 801. A UDM/UDR obtains capability information of UE.

Step 802. An AF reports service description information and corresponding capability information of the AF to the UDM/UDR.

Steps 801 and 802 are the same as the foregoing steps 601 and 602, and details are not described herein again.

Step 803. The UDM/UDR requests an AUSF to perform security protection, for example, integrity protection, on information to be sent to the UE.

The UDM/UDR may send a UPU protection request message to the AUSF. The UPU protection request message is used to request the AUSF to perform security protection, for example, integrity protection, on information that the UDM/UDR needs to send to the UE. The UPU protection request includes an identifier of the UE, the service description information and the corresponding capability information of the AF.

Step 804. The AUSF performs security protection on the information to be sent by the UDM/UDR, and sends security-protected information to the UDM/UDR.

Optionally, the AUSF obtains, based on the identifier of the UE, an intermediate key Kausf generated in a primary authentication process of the UE, and performs integrity protection on the service description information and the corresponding capability information of the AF, to obtain first authentication message code, and sends the first authentication message code to the UDM/UDR.

Step 805. The UDM/UDR sends security-protected service description information and security-protected corresponding capability information of the AF to the UE.

In a possible implementation, the UDM/UDR sends an Nudm_SDM_notification message to the AMF, where the Nudm_SDM_notification message includes the security-protected service description information and the security-protected corresponding capability information of the AF. Specifically, the security-protected service description information and the security-protected corresponding capability information of the AF may include the first authentication message code and the service description information and the corresponding capability information of the AF. After receiving the security-protected service description information and the security-protected corresponding capability information of the AF, the AMF sends a DL NAS transport message to the UE. The DL NAS transport message includes the first authentication message code and the service description information and the corresponding capability information of the AF.

Step 806. The UE receives the security-protected service description information and the security-protected corresponding capability information of the AF that are sent by the AMF, and determines, based on the service description information and the corresponding capability information of the AF, a service mode used by the UE and the AF.

In a possible implementation, the UE may first verify the received information, for example, verify whether the received service description information and the received corresponding capability information of the AF are tampered with. Specifically, the UE may obtain second authentication message code through calculation by using the intermediate key Kausf in the primary authentication process and the service description information and the corresponding authentication capability information of the AF; and when the first authentication message code is the same as the second authentication message code, determine that the received service description information and the received corresponding capability information of the AF are not tampered with. Further, when determining that the received service description information and the received corresponding capability information of the AF are not tampered with, the UE stores the received service description information and the received corresponding capability information of the AF.

For determining, by the UE based on the service mode supported by the AF, a service mode used by the UE and the AF, refer to the descriptions in the foregoing embodiments. Details are not described herein again.

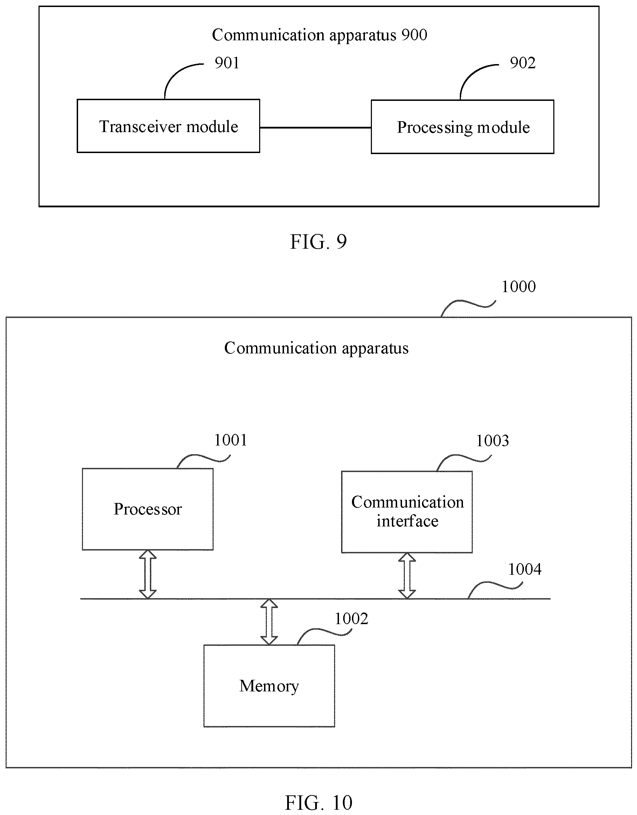

Based on a same inventive concept as the method embodiments, an embodiment of this application further provides an apparatus 900, configured to perform the methods performed by the terminal device and various network devices (such as the AF, the NEF, the UDR/UDM, the PCF, or the AMF) in the method embodiments shown in FIG. 6 to FIG. 8. For related features, refer to the foregoing method embodiments, and details are not described herein again. In an example, as shown in FIG. 9, the apparatus 900 includes a transceiver module 901 and a processing module 902.

For specific functions of the transceiver module 901 and the processing module 902, refer to the descriptions in the foregoing method embodiments. Details are not described herein again.

This is not described herein again. Division into units in embodiments of this application is an example and is merely logical function division, and there may be another division manner in an actual implementation. In addition, various functional units in embodiments of this application may be integrated into one processor, each of the units may exist alone physically, or two or more units are integrated into one module. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially or a part that makes a contribution to the prior art, or all or a part of the technical solutions may be embodied in a form of a software product. The software product is stored in a storage medium, and the product includes several instructions for instructing a terminal device (which may be a personal computer, a mobile phone, a network device, or the like) or a processor to perform all or some steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In embodiments of this application, both the terminal device and the network device may be presented in a form of functional modules obtained through division in an integrated manner. The "module" herein may be a specific ASIC, a circuit, a processor and a memory that execute one or more software or firmware programs, an integrated logic circuit, and/or another device that can provide the foregoing functions.

In a simple embodiment, a communication apparatus 1000 shown in FIG. 10 includes at least one processor 1001 and a memory 1002, and optionally, may further include a communication interface 1003.

The memory 1002 may be a volatile memory, for example, a random access memory. Alternatively, the memory may be a nonvolatile memory, for example, a read-only memory, a flash memory, a hard disk drive (hard disk drive, HDD), or a solid-state drive (solid-state drive, SSD). Alternatively, the memory 1002 is any other medium that can be configured to carry or store expected program code in a form of instructions or a data structure and that can be accessed by a computer, but is not limited thereto. The memory 1002 may be a combination of the foregoing memories.

A specific connection medium between the processor 1001 and the memory 1002 is not limited in this embodiment of this application. In this embodiment of this application, the memory 1002 and the processor 1001 are connected by using a bus 1004 in the figure. The bus 1004 is represented by using a thick line in the figure. A manner of connection between other components is merely an example for description, and is not limited thereto. The bus 1004 may be classified into an address bus, a data bus, a control bus, and the like. For ease of representation, only one thick line is used to represent the bus in FIG. 10, but this does not mean that there is only one bus or only one type of bus.

The processor 1001 may have a data receiving and sending function, and can communicate with another device. In the apparatus shown in FIG. 10, an independent data receiving and sending module, for example, the communication interface 1003, may also be disposed to receive and send data. When communicating with another device, the processor 1001 may perform data transmission through the communication interface 1003.

In an example, when the terminal device uses the form shown in FIG. 10, the processor in FIG. 10 may invoke computer executable instructions stored in the memory 1002, so that the terminal device performs the method performed by the terminal device in any one of the foregoing method embodiments.

Specifically, functions/implementation processes of the processing module and the transceiver module in FIG. 9 may be implemented by the processor 1001 in FIG. 10 by invoking the computer executable instructions stored in the memory 1002. Alternatively, functions/implementation processes of the processing module in FIG. 9 may be implemented by the processor 1001 in FIG. 10 by invoking the computer executable instructions stored in the memory 1002. Functions/implementation processes of the transceiver module in FIG. 9 may be implemented by the communication interface 1003 in FIG. 10.

In another example, when the network device uses the form shown in FIG. 10, the processor in FIG. 10 may invoke computer executable instructions stored in the memory 1002, so that the network device performs the method performed by the network device in any one of the foregoing method embodiments.

An embodiment of this application further provides a communication system. The communication system may include an application function AF network element and a data management network element. Optionally, the communication system further includes a policy control function network element.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

The foregoing describes this application with reference to the flowcharts and/or block diagrams of the method, the device (system), and/or the computer program product in this application. It should be understood that computer program instructions may be used to implement each process and/or each block in the flowcharts and/or the block diagrams and a combination of a process and/or a block in the flowcharts and/or the block diagrams. These computer program instructions may be provided to a processor of a general-purpose computer, a processor of a dedicated computer, or another programmable data processing device to produce a machine, so that the instructions executed by the processor of the computer and/or the another programmable data processing apparatus create an apparatus for implementing a specific function in one or more processes in the flowcharts and/or one or more blocks in the block diagrams.

These computer program instructions may also be stored in a computer readable memory that can guide a computer or another programmable data processing device to work in a specific manner, so that the instructions stored in the computer readable memory generate a manufacture including an instruction apparatus, and the instruction apparatus implements a function specified in one or more processes in the flowcharts and/or one or more blocks in the block diagrams.

These computer program instructions may be provided to a computer or another programmable device, so that the computer or the another programmable device performs a series of operation steps to generate processing implemented by the computer. Therefore, instructions executed on the computer or the another programmable device are used to implement steps of a function specified in one or more processes in the flowcharts and/or one or more blocks in the block diagrams.

Apparently, a person skilled in the art may make various modifications and variations to this application without departing from the scope of this application. This application is intended to cover these modifications and variations of this application provided that they fall within the scope of protection defined by the following claims and their equivalent technologies.

## Claims

1. A communication system, wherein the system comprises an application function network element and a data management network element;
the application function network element is configured to send first information to the data management network element, wherein the first information comprises capability information of the application function network element, and the capability information of the application function network element is used to indicate a service mode supported by the application function network element; and
the data management network element is configured to receive the capability information of the application function network element from the application function network element, and send the capability information of the application function network element to a terminal device.

2. The system according to claim 1, wherein the system further comprises a policy control function network element;
the data management network element is specifically configured to send the capability information of the application function network element to the policy control function network element; and
the policy control function network element is configured to receive the capability information of the application function network element sent by the data management network element, and send the capability information of the application function network element to the terminal device by using an access and mobility management function.

3. The system according to claim 2, wherein the policy control function network element is configured to generate or update a UE route selection policy URSP corresponding to the terminal device, and the URSP comprises the capability information of the application function network element.

4. The system according to claim 1, wherein the data management network element is specifically configured to: request an authentication server function network element to perform security protection on the capability information of the application function network element; receive a response message sent by the authentication server function network element, wherein the response message comprises security-protected capability information of the application function network element; and send the security-protected capability information of the application function network element to the terminal device by using an access and mobility management function.

5. The system according to any one of claims 1 to 4, wherein the data management network element is further configured to: obtain capability information of the terminal device, wherein the capability information of the terminal device is used to indicate a service mode supported by the terminal device; and when the service mode supported by the terminal device matches the service mode supported by the application function network element, determine that the capability information of the application function network element needs to be sent to the terminal device.

6. The system according to any one of claims 1 to 4, wherein the first information further comprises a target object identifier, wherein the target object identifier is used to indicate the terminal device; and
the data management network element is further configured to determine, based on the target object identifier, that the capability information of the application function network element needs to be sent to the terminal device.

7. The system according to any one of claims 1 to 5, wherein the capability information of the application function network element further comprises a service mode selection policy, and the service mode selection policy is used to indicate priorities of a plurality of service modes supported by the application function network element.

8. A communication method, wherein the method comprises:
receiving first information from an application function network element, wherein the first information comprises capability information of the application function network element, and the capability information of the application function network element is used to indicate a service mode supported by the application function network element; and
sending the capability information of the application function network element to a terminal device.

9. The method according to claim 8, wherein the first information further comprises a target object identifier, wherein the target object identifier is used to indicate the terminal device; and the method further comprises:
determining, based on the target object identifier, that the capability information of the application function network element needs to be sent to the terminal device.

10. The method according to claim 8 or 9, wherein the method further comprises:
obtaining capability information of the terminal device, wherein the capability information of the terminal device is used to indicate a service mode supported by the terminal device; and
when the service mode supported by the terminal device matches the service mode supported by the application function network element, determining that the capability information of the application function network element needs to be sent to the terminal device.

11. The method according to any one of claims 8 to 10, wherein the sending the capability information of the application function network element to a terminal device is specifically:
sending the capability information of the application function network element to the terminal device by using a policy control function network element.

12. The method according to any one of claims 8 to 10, wherein the sending the capability information of the application function network element to a terminal device is specifically:
requesting an authentication server function network element to perform security protection on the capability information of the application function network element;
receiving a response message sent by the authentication server function network element, wherein the response message comprises security-protected capability information of the application function network element; and
sending the security-protected capability information of the application function network element to the terminal device by using an access and mobility management function network element.

13. The method according to any one of claims 8 to 10, wherein the sending the capability information of the application function network element to a terminal device is specifically:
generating a UE route selection policy URSP, wherein the URSP comprises the capability information of the application function network element; and
sending the URSP to the terminal device.

14. The method according to any one of claims 8 to 13, wherein the capability information of the application function network element further comprises a service mode selection policy, and the service mode selection policy is used to indicate priorities of a plurality of service modes supported by the application function network element.

15. The method according to any one of claims 8 to 13, wherein the method further comprises:
determining the priorities of the plurality of service modes supported by the application function network element.

16. A communication method, wherein the method comprises:
receiving, by a terminal device, capability information of an application function network element sent by an access and mobility management function network element, wherein the capability information is used to indicate a service mode supported by the application function network element; and
determining, by the terminal device based on the service mode supported by the application function network element, a service mode used by the terminal device and the application function network element.

17. The method according to claim 16, wherein the capability information further comprises a service mode selection policy, and the service mode selection policy is used to indicate priorities of a plurality of service modes supported by the application function network element;
the determining, by the terminal device based on the service mode supported by the application function network element, a service mode used by the terminal device and the application function network element is specifically:
using, by the terminal device as the service mode used by the terminal device and the application function network element, a service mode with a highest priority in service modes supported by both the terminal device and the application function network element.

18. The method according to claim 16 or 17, wherein the receiving, by a terminal device, capability information of an application function network element sent by an access and mobility management function network element is specifically:
receiving, by the terminal device, a UE route selection policy URSP sent by the access and mobility management function network element, wherein the URSP comprises the capability information of the application function network element.

19. A communication apparatus, comprising a processing module and a transceiver module, used by the apparatus to implement the method according to any one of claims 8 to 15 or the method according to any one of claims 16 to 18.

20. A communication apparatus, comprising a processor, wherein the processor is coupled to a memory, and the memory is configured to store a program or instructions; and when the program or the instructions are executed by the processor, the apparatus is enabled to perform the method according to any one of claims 8 to 15 or the method according to any one of claims 16 to 18.

21. A computer-readable storage medium, wherein the computer-readable storage medium stores a computer program or instructions; and when the computer program or the instructions are executed, a computer is enabled to perform the method according to any one of claims 8 to 15 or the method according to any one of claims 16 to 18.

22. A chip, comprising a processor, wherein the processor is coupled to a memory, and the memory is configured to store a program or instructions; and when the program or the instructions are executed by the processor, the chip is enabled to perform the method according to any one of claims 8 to 15 or the method according to any one of claims 16 to 18.
